(19) Europäisches Patentamt
European Patent Office
Office européen des brevets

(11) **EP 2 610 306 A1**

(12) **EUROPEAN PATENT APPLICATION**

(43) Date of publication:
**03.07.2013 Bulletin 2013/27**

(51) Int Cl.:
*C08L 55/02* (2006.01)     *C08F 285/00* (2006.01)

(21) Application number: **12198212.8**

(22) Date of filing: **19.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.12.2011 KR 20110142487**

(71) Applicant: **Cheil Industries Inc.**
**Uiwang-si, Gyeonggi-do (KR)**

(72) Inventors:
• JANG, Tae Woog
  **Uiwang-si, Gyeonggi-do (KR)**
• JUNG, Chang Do
  **Uiwang-si, Gyeonggi-do (KR)**

(74) Representative: **Bublak, Wolfgang**
  **Bardehle Pagenberg Partnerschaft**
  **Patentanwälte, Rechtsanwälte**
  **Prinzregentenplatz 7**
  **81675 München (DE)**

(54) **Thermoplastic resin composition with flowability, transparency, and impact strength**

(57)     A thermoplastic resin composition includes (A) a transparent rubber modified aromatic vinyl copolymer including (a1) a graft copolymer including a core of a rubber based polymer and a shell formed on a surface of the core by graft polymerization of alkyl ester monomer, unsaturated nitrile monomer, and aromatic vinyl monomer; and (a2) a non-graft copolymer including a unit derived from an alkyl ester monomer; and (B) a low molecular weight acrylic copolymer with a weight average molecular weight of 1,000 to 10,000 g/mol. The thermoplastic resin composition can have a melt flow index of 13 to 35 g/10min a haze of 2 to 5% , and a Notch Izod impact strength of 11 to 15 kgf·cm/cm.

EP 2 610 306 A1

**Description**

The present invention relates to a thermoplastic resin composition.

Acrylonitrile-butadiene-styrene (ABS) resins can have excellent physical properties, such as moldability attributed to styrene, strength and chemical resistance attributed to acrylonitrile, and impact strength attributed to butadiene. ABS resins can also have a desirable appearance. Thus ABS resins are widely used in automobiles, electric/electronic equipment, office machines, home appliances, toys, and the like. However, the use of ABS resin can be limited due to its opaque nature.

ABS resin is opaque is because of the difference between the refractive index of the continuous phase matrix resin and dispersed phase rubber. Visible light becomes dispersed depending on the size of rubber particles at the interface. Therefore, to make ABS resin transparent, the refractive index of the rubber phase and continuous phase matrix resin can be matched and the scattering of visible light can be minimized by appropriately regulating the size of rubber particles.

Transparent ABS resin including (meth)acrylate monomer has been used. This transparent ABS resin is mostly used in components of home appliances. There is an increasing need for ABS for other applications. For example ABS resin can be used in large products, such as decorative materials for home appliances, and transparent view windows of washing machines. However, transparency and the quality of appearance can deteriorate during the injection molding process.

To overcome this problem, ABS resin should have good impact strength and also good fluidity for improved moldability (processability). These physical properties, however, can be contradictory and affect the other, and thus it is not easy to develop a resin that satisfies all the required physical properties at the same time.

Korean Patent No. 0714887 states that injection molding workability of the ABS resin can be improved by mixing it with acetomonoglyceride. However, this method also can reduce transparency due to the difference between the refractive indexes of the transparent ABS resin and acetomonoglyceride.

It is the object of the present invention to provide a thermoplastic resin composition that can have excellent transparency while maintaining injection molding workability. The thermoplastic resin composition can also have high impact strength and good flowability.

This object has been achieved by the surprising finding that adding a low molecular weight acrylic copolymer to a transparent rubber modified aromatic vinyl copolymer can provide a thermoplastic resin composition with good flowability, transparency, and impact strength.

A thermoplastic resin composition in accordance with the invention can include a transparent rubber modified aromatic vinyl copolymer (A) comprising a graft copolymer (a1) comprising a core made of a rubber based polymer and a shell formed on the surface of the core by graft copolymerization of aromatic vinyl monomer, unsaturated nitrile monomer, and alkyl ester monomer; and a non-graft copolymer (a2) including a unit derived from an alkyl ester monomer; and a low molecular weight acrylic copolymer (B) with a weight average molecular weight in a range of 1,000 to 10,000 g/mol.

The thermoplastic resin composition can include component (B) in an amount of 0.5 to 5 parts by weight, based on 100 parts by weight of component (A).

Examples of the alkyl ester monomer can include without limitation acrylic alkyl ester monomers, methacrylic alkyl ester monomers, and the like, and combinations thereof.

Component (A) can include the graft copolymer (a1) in an amount of 5 to 50 % by weight, and the non-graft copolymer (a2) in an amount of 50 to 95 % by weight.

The mean particle size of the rubber based polymer of the graft copolymer (a1) that constitutes the core can range from 0.10 to 0.30 $\mu$m. Examples of the rubber based polymer can include without limitation butadiene rubber, acrylic rubber, ethylene-propylene copolymer rubber, butadiene-styrene copolymer rubber, acrylonitrile-butadiene copolymer rubber, isoprene rubber, ethylene-propylene-diene terpolymer rubber, polyorganosiloxane-polyalkyl(meth)acrylate rubber complex and the like and combinations thereof.

In the graft copolymer (a1), the shell can include an inner shell as well as an outer shell, wherein the outer shell includes a unit derived from an alkyl ester monomer. The inner shell can be a copolymer of unsaturated nitrile monomer and aromatic vinyl monomer, and the outer shell can be made by polymerization of one or more alkyl ester monomers. In another embodiment, the inner shell can be a copolymer of alkyl ester monomer, unsaturated nitrile monomer, and aromatic vinyl monomer, and the outer shell can also be a copolymer of alkyl ester monomer, unsaturated nitrile monomer, and aromatic vinyl monomer.

The graft copolymer (a1) can include the core in an amount of 30 to 70 % by weight, a unit derived from alkyl ester monomer in an amount of 15 to 55 % by weight, a unit derived from unsaturated nitrile monomer in an amount of 1 to 5 % by weight, and a unit derived from aromatic vinyl monomer in an amount of 5 to 35 % by weight.

The non-graft copolymer (a2) includes a unit derived from alkyl ester monomer in an amount of 40 to 100 % by weight. Non-graft copolymer (a2) can include without limitation a polymer or copolymer formed by polymerization of acrylic alkyl ester monomer, methacrylic alkyl ester monomer, or a combination thereof; a copolymer formed by polymerization of alkyl ester monomer and aromatic vinyl monomer; a copolymer formed by polymerization of alkyl ester monomer, aromatic vinyl monomer, and unsaturated nitrile monomer; or a combination thereof.

A thermoplastic resin composition in this invention can further include one or more additives such as but not limited to antibacterial agents, thermal stabilizers, antioxidants, release agents, light stabilizers, inorganic fillers, surfactants, coupling agents, plasticizers, compatibilizers, lubricants, antistatic agents, coloring agents such as pigments and/or dyes, flame retardants, auxiliary flame retardants, anti-dripping agents, weather proofing agents, ultraviolet radiation absorbents, sunscreen agents, and the like, and combinations thereof.

In exemplary embodiments, the thermoplastic resin composition can have a melt flow index of 13 to 35 g/10min measured at a temperature of 220°C and a load of 10kg in accordance with ISO 1133. In exemplary embodiments, the thermoplastic resin can have a haze of 2 to 5 %, measured for a specimen having a thickness of 2.5mm in accordance with ASTM D1003. Also in exemplary embodiments, the thermoplastic resin composition can have an Izod impact strength of 11 to 15 kgf■cm/cm, measured for a specimen having a thickness of 3.175mm in accordance with ASTM D256.

The present invention can provide a thermoplastic resin composition that can have excellent transparency, impact strength, injection moldability, and flowability.

The present invention now will be described more fully hereinafter in the following detailed description of the invention, in which some, but not all embodiments of the invention are described. Indeed, this invention may be embodied in many different forms and should not be construed as limited to the embodiments set forth herein; rather, these embodiments are provided so that this disclosure will satisfy applicable legal requirements.

The present invention can provide a thermoplastic resin composition that can have excellent flowability, good transparency, and good impact strength.

The thermoplastic resin composition in accordance with this invention includes a transparent rubber modified aromatic vinyl copolymer (A) comprising a graft copolymer (a1) including a core made of a rubber based polymer and a shell including a graft polymer formed on the surface of the shell; and a non-graft copolymer (a2) including a unit derived from alkyl ester monomers; and a low molecule weight acrylic copolymer (B) with a weight average molecular weight of 1,000 g/mol to 10,000g/mol.

(A) Transparent rubber modified aromatic vinyl copolymer

The transparent rubber modified aromatic vinyl copolymer (A) comprises a graft copolymer (a1) and a non-graft copolymer (a2) including a unit derived from alkyl ester monomers. The transparency of the transparent rubber modified aromatic vinyl copolymer (A) can be excellent compared with existing rubber-modified aromatic vinyl copolymers.

(a1) Graft copolymer

Graft copolymer (a1) has a core-shell structure, wherein the core comprises a rubber based polymer, and the shell is formed on the surface of the core by graft polymerization of alkyl ester monomer, unsaturated nitrile monomer, and aromatic vinyl monomer.

Examples of the rubber based polymer include without limitation butadiene rubbers, acrylic rubbers, ethylene-propylene copolymer rubbers, butadiene-styrene copolymer rubbers, acrylonitrile-butadiene copolymer rubbers, isoprene rubbers, ethylene-propylene-diene terpolymer rubbers, polyorganosiloxane-polyalkyl(meth)acrylate rubber complexes, and the like, and combinations thereof. These can be used singly or as a combination thereof.

In exemplary embodiments, the core can be a butadiene rubber or butadiene-styrene copolymer rubber. If a butadiene-styrene copolymer rubber is used, the butadiene-styrene copolymer rubber can include styrene in an amount of less than 30 % by weight.

In the graft copolymer (a1), the average particle size of the rubber based polymer can range from 0.10 to 0.30μm. When the average particle size of the rubber based polymer is within the above range, an adequate balance of transparency, impact strength, and gloss can be maintained.

Examples of the alkyl ester monomer include without limitation acrylic alkyl ester monomers, methacrylic alkyl ester monomers, and the like, and combinations thereof.

The acrylic alkyl ester monomer and/or methacrylic alkyl ester monomer are not specifically limited. Examples of acrylic alkyl ester monomers and/or methacrylic alkyl ester monomers include without limitation C1 to C10 alkyl acrylates, C1 to C10 alkyl methacrylates, and combinations thereof. Examples of the C1 to C10 alkyl acrylates include without limitation methyl acrylate, ethyl acrylate, propyl acrylate, isopropyl acrylate, t-butyl acrylate, n-butyl acrylate, n-octyl acrylate, 2-ethylhexyl acrylate, and the like, and combinations thereof. Examples of the C1 to C10 alkyl methacrylates include without limitation methyl methacrylate, ethyl methacrylate, propyl methacrylate, isopropyl methacrylate, t-butyl methacrylate, n-butyl methacrylate, n-octyl methacrylate, 2-ethylhexyl methacrylate, and the like, and combinations thereof. In exemplary embodiments, methyl methacrylate can be used.

The unsaturated nitrile monomer is a compound comprising an unsaturated hydrocarbon and cyanide group together, which can be radically polymerized, and the type of this monomer is not specifically limited. Examples of unsaturated nitrile monomers include without limitation acrylonitrile, methacrylonitrile, ethacrylonitrile, and the like, and combinations thereof. These can be used singly or as a combination thereof. In exemplary embodiments, acrylonitrile can be used.

The types of aromatic vinyl monomer are not specifically limited. Examples of aromatic vinyl monomers include without limitation styrene, C1 to C10 alkyl substituted styrene, halogen substituted styrene, vinyl naphthalene, and the like, and combinations thereof. These can be used singly or as a combination thereof. Examples of the aromatic vinyl monomers can include without limitation styrene, C1 to C 10 alkyl substituted styrene wherein a hydrogen atom of the vinyl group is substituted, C1 to C10 alkyl substituted styrene wherein a hydrogen atom of the benzene group is substituted, halogen substituted styrene wherein a hydrogen atom of the vinyl group is substituted, halogen substituted styrene wherein a hydrogen atom of the benzene group is substituted, vinyl naphthalene, and the like, and combinations thereof. Exemplary aromatic vinyl monomers include without limitation styrene, $\alpha$-methyl styrene, $\beta$-methyl styrene, o-methyl styrene, m-methyl styrene, p-methyl styrene, o-ethyl styrene, m-ethyl styrene, p-ethyl styrene, propyl styrene, butyl styrene, monochlorostyrene, dichlorostyrene, trichlorostyrene, 1-vinylnaphthanlene, 2-vinylnaphthalene, and the like, and combinations thereof. In exemplary embodiments, styrene can be used.

The shell can further include one or more additional monomers. Examples of additional monomers include without limitation maleic anhydride, C1 to C4 alkyl- or phenyl-substituted maleimide, and the like and combinations thereof.

The shell can include an inner shell and an outer shell. In exemplary embodiments, the outer shell can include units derived from alkyl ester monomer. In this case, the inner shell can play the role of improving impact strength, and the outer shell can play the role of improving scratch resistance.

In exemplary embodiments, the inner shell can be a polymerization product (copolymer) of unsaturated nitrile monomer and aromatic vinyl monomer, and the outer shell can be a polymerization product (copolymer) of alkyl ester monomer.

In other exemplary embodiments, the inner shell can be a polymerization product (copolymer) of alkyl ester monomer, unsaturated nitrile monomer, and aromatic vinyl monomer, and the outer shell can also be a polymerization product (copolymer) of alkyl ester monomer, unsaturated nitrile monomer, and aromatic vinyl monomer (for example, the same components as used in the inner shell).

Examples of a copolymer of the inner shell which is a polymerization product of unsaturated nitrile monomer and aromatic vinyl monomer include without limitation styrene-acrylonitrile (SAN) copolymers. Examples of a copolymer of the outer shell which is the polymerization product of acrylic alkyl ester monomer, methacrylic alkyl ester monomer, or a combination thereof include without limitation polymethylmethacrylate (PMMA).

An exemplary method for preparing a graft copolymer (a1) is described below.

On the surface of the core which is made of rubber based polymer, aromatic vinyl monomer and unsaturated nitrile monomer, which are polymerized to form an inner shell (the 1st stage), acrylic alkyl ester monomer or methacrylic alkyl ester monomer are added to form an outer shell which encloses this inner shell (the 2nd stage). The 1st stage can be conducted using a hydrocarbon soluble redox initiator system as known in the art, and the 2nd stage can be conducted using a water soluble initiator system also as known in the art. The graft copolymer prepared during the 2nd stage can be subject to post processing steps such as solidification, washing, and dehydration, and thereafter converted into powder form.

The graft copolymer (a1) can improve the transparency, because the difference between the refractive index of the core and the shell can be reduced, scratch resistance can be improved by positioning the alkyl ester monomer at the end of a chain, and weather resistance can be improved by enclosing the outermost edge of the core with an alkyl ester monomer.

The graft copolymer (a1) can include a core in an amount of 30 to 70 % by weight, an unit derived from an alkyl ester monomer in an amount of 15 to 55 % by weight, an unit derived from unsaturated nitrile monomer in an amount of 1 to 5 % by weight, and an unit derived from aromatic vinyl monomer in an amount of 5 to 35 % by weight, each based on the total weight of the graft copolymer (a1).

A representative example of graft copolymer (a1) is methylmethacrylate-acrylonitrile-butadienestyrene graft copolymer (g-MABS) but the invention is not limited thereto.

The graft ratio of the graft copolymer (a1) can range from 30 to 70%. When the graft ratio is within this range, a white powder with uniform particle size can be obtained during solidification and drying. Also, problems of poor surface condition or gloss on the surface of the product so formed by non-plasticized particles can be minimized during the extrusion or injection molding process. Also, the impact strength, moldability, and surface gloss can be excellent.

(a2) Non-graft copolymer

In this invention, non-graft copolymer (a2) means a copolymer excluding a graft copolymer with a rubber component, and examples of the non-graft copolymer can include without limitation alternating copolymers, random copolymers, block copolymers, and the like, and combinations thereof. Also, non-graft copolymer (a2) includes a unit derived from acrylic alkyl ester monomer, methacrylic alkyl ester monomer, or a combination thereof.

Examples of non-graft copolymer (a2) include without limitation homopolymers and/or copolymers and/or combinations thereof formed by polymerizing acrylic alkyl ester monomer(s), methacrylic alkyl ester monomer(s), or a combination thereof; copolymers of alkyl ester monomer(s) and aromatic vinyl monomer(s); copolymers of alkyl ester monomer(s), aromatic vinyl monomer(s), and unsaturated nitrile monomer(s); and combinations thereof. These can be used singly or as a combination thereof.

Examples of the alkyl ester monomers include without limitation acrylic alkyl ester monomers, methacrylic alkyl ester monomers, and the like, and combinations thereof. The particular alkyl ester monomer is not specifically limited. Examples of the alkyl ester monomers include without limitation C1 to C10 alkyl acrylates, C1 to C10 alkyl methacrylates, and the like, and combinations thereof. Examples of the C1 to C10 alkyl acrylates include without limitation methyl acrylate, ethyl acrylate, propyl acrylate, isopropyl acrylate, t-butyl acrylate, n-butyl acylate, n-octyl acrylate, 2-ethylhexyl acrylate, and the like, and combinations thereof. Examples of the C1 to C10 alkyl methacrylates include without limitation methyl methacrylate, ethyl methacrylate, propyl methacrylate, isopropyl methacrylate, t-butyl methacrylate, n-butyl methacrylate, n-octyl methacrylate, 2-ethylhexyl methacrylate, and the like, and combinations thereof. In exemplary embodiments, methyl methacrylate can be used.

Examples of the aromatic vinyl monomers include without limitation styrene, C1 to C10 alkyl substituted styrene, halogen substituted styrene, and vinyl naphthalene, and the like and combinations thereof. These can be used singly or as a combination thereof. Examples of the aromatic vinyl monomer can include without limitation styrene, C1 to C10 substituted styrene wherein a hydrogen atom of the vinyl group is substituted, C1 to C10 alkyl substituted styrene wherein a hydrogen atom of the benzene group is substituted, halogen substituted styrene wherein a hydrogen atom of the vinyl group is substituted, halogen substituted styrene wherein a hydrogen atom of the benzene group is substituted, vinyl naphthalene and the like and combinations thereof. Examples of the aromatic vinyl monomers include without limitation styrene, $\alpha$-methyl styrene, $\beta$-methyl styrene, o-methyl styrene, m-methylstyrene, p-methylstyrene, o-ethylstyrene, m-ethylstyrene, p-ethylstyrene, propylstyrene, buthylstyrene, monochlorostyrene, dichlorostyrene, trichlorostyrene, 1-vinylnaphthalene, 2-vinylnaphthalene, and the like, and combinations thereof. In exemplary embodiments, styrene can be used as an aromatic vinyl monomer.

The unsaturated nitrile monomer is a compound comprising both an unsaturated hydrocarbon and cyanide group which can be radically polymerized, and the type of this monomer is not specifically limited. Examples of unsaturated nitrile monomers include without limitation acrylonitrile, methacrylonitrile, ethacrylonitrile, and the like, and combinations thereof. These can be used singly or as a combination thereof. In exemplary embodiments, acrylonitrile can be used.

Examples of copolymers of acrylic alkyl ester monomer, methacrylic alkyl ester monomer, or a combination thereof include without limitation polymethylmethacrylates.

Examples of copolymers of acrylic alkyl ester monomer or methacrylic alkyl ester monomer, aromatic vinyl monomer, and unsaturated nitrile monomer include without limitation methyl methacrylate-styrene-acrylonitrile copolymers.

A non-graft copolymer (a2) can include a unit derived from alkyl ester monomer in an amount of 40 to 100 % by weight, based on the total weight of the non-graft copolymer (a2)..

When the non-graft copolymer (a2) includes a unit derived from alkyl ester monomer in an amount within this range, the gloss, scratch resistance, transparency, and property of weather resistance can be excellent.

Component (A) can include the graft copolymer (a1) in an amount of 5 to 50 % by weight and the non-graft copolymer (a2) in an amount of 50 to 95 % by weight, based on the total weight of component (A).

(B) Low molecular weight acrylic copolymer

The low molecular weight acrylic copolymer (B) can have a weight average molecular weight of 1,000 to 10,000 g/mol, for example 1,000 to 3,000 g/mol.

When the weight average molecular weight of the low molecular weight acrylic copolymer is within the above range, the transparency and flowability can be excellent, and problems associated with gas generation during the forming process can be minimized or prevented.

The low molecular acrylic copolymer (B) can be a polymer and/or copolymer of acrylic alkyl ester monomer, methacrylic alkyl ester monomer or a combination thereof. In exemplary embodiments, polybutylacrylate can be used.

The type of acrylic alkyl ester monomer or methacrylic alkyl ester monomer is not specifically limited. Examples of the acrylic alkyl ester monomer or methacrylic alkyl ester monomer can include without limitation C1 to C10 alkyl acrylates, C1 to C10 alkyl methacrylates, and the like, and combinations thereof. Examples of the C1 to C10 alkyl acrylates include without limitation methyl acrylate, ethyl acrylate, propyl acrylate, isopropyl acrylate, t-butyl acrylate, n-butyl acrylate, n-octyl acrylate, 2-ethylhexyl acrylate, and the like, and combinations thereof. Examples of the C1 to C10 alkyl methacrylates include without limitation methyl methacrylate, ethyl methacrylate, propyl methacrylate, isopropyl methacrylate, t-butyl methacrylate, n-butyl methacrylate, n-octyl methacrylate, 2-ethylhexyl methacrylate, and the like, and combinations thereof. In exemplary embodiments, n-butylacrylate can be used.

The thermoplastic resin composition of the invention can include low molecular weight acrylic copolymer (B) in an amount of 0.5 to 5 parts by weight, based on 100 parts by weight of the transparent rubber-modified aromatic vinyl copolymer (A).

When the thermoplastic resin composition of the invention includes the low molecular weight acrylic copolymer (B) in an amount within the above range, the flowability of the composition can be significantly improved while maintaining the transparency and impact strength of the thermoplastic resin composition.

The thermoplastic resin composition in accordance with the invention can optionally further include one or more additives. Examples of the additives include without limitation antibacterial agents, thermal stabilizers, antioxidants, release agents, light stabilizers, inorganic fillers, surfactants, coupling agents, plasticizers, compatibilizers, lubricants, antistatic agents, coloring agents such as pigments and/or dyes, flame retardants, auxiliary flame retardants, anti-dripping agents, weather resistance agents, ultraviolet absorbents, sunscreen agents, and the like, and combinations thereof.

Examples of antioxidants include without limitation phenol type antioxidants, phophite type antioxidants, thioether type antioxidants, amine type antioxidants, and the like, and combinations thereof.

Examples of release agents include without limitation fluorine containing polymers, silicone oils, metal salts of stearic acid, metal salts of montanic acid, montanic acid ester waxes, polyethylene waxes, and the like, and combinations thereof.

Examples of inorganic fillers include without limitation glass fibers, carbon fibers, silica, mica, alumina, clay, calcium carbonate, calcium sulfate, glass beads, and the like, and combinations thereof.

Examples of pigments include without limitation titanium dioxide, carbon black, and the like, and combinations thereof.

Examples of flame retardants include without limitation phosphorus containing flame retardants, nitrogen containing flame retardants, halogen containing flame retardants, and the like, and combinations thereof.

Examples of auxiliary flame retardants include without limitation antimony oxides and the like and combinations thereof.

Examples of the anti-dripping agents include without limitation polytetrafluoroethylene.

Examples of weather resistance agents include without limitation benzophenone type weather resistance agents, amine type weather resistance agents, and the like, and combinations thereof.

The thermoplastic resin composition can include the additive(s) in an amount of 0.1 parts by weight to 40 parts by weight, based on 100 parts by weight of the transparent rubber modified aromatic vinyl copolymer (A).

The thermoplastic resin composition in accordance with this invention can be prepared using conventional methods of preparing resin compositions. For example, a thermoplastic resin composition in accordance with this invention can be prepared by mixing the components discussed herein and optionally other additives using an extruder, kneader, mixer, or the like. Also, a thermoplastic resin composition in accordance with this invention can be prepared using a method wherein after mixing, these components and other optional additives can be mixed at the same time, then melted and extruded using an extruder to form pellets.

In exemplary embodiments, the thermoplastic resin composition of the invention can have a melt flow index of 13 to 35 g/10min measured at a temperature of 220°C and a load of 10 kg in accordance with ISO 1133. In exemplary embodiments, the thermoplastic resin composition of the invention can have a haze of 2 to 5%, measured for a specimen with a thickness of 2.5mm in accordance with ASTM D1003. Also in exemplary embodiments, the thermoplastic resin composition can have an Izod impact strength of 11 to 15 kgf·cm/cm for a specimen with a thickness of 3.175mm measured in accordance with ASTM D256.

A thermoplastic resin composition in accordance with this invention can be used in the production of molded (formed) products which require excellent transparency or excellent transparency as well as a large size, and can be also be used in the manufacture of molded (formed) products which require excellent flowability, transparency, and impact strength at the same time. For example, a thermoplastic resin composition in accordance with this invention can be used to manufacture a visible part of a home appliance, such as the viewing window of a washing machine.

There is no specific limitation on the method used to prepare molded products using the thermoplastic resin composition of the invention. Exemplary methods of production include without limitation extrusion, injection molding, casting, and the like. Suitable methods for making products using the thermoplastic resin composition of the invention will readily understood by the skilled artisan without undue experimentation.

The following examples are provided for the purpose of exemplifying this invention, and are not intended to limit the scope of protection of this invention.

**Examples and Comparative Examples**

Each of the components of the compositions used in the examples and comparative examples is as described below.

(A) A transparent rubber modified aromatic vinyl copolymer

MABS from Cheil Industries (Inc) with a rubber content of 24 % by weight (Brand name: STAREX CT-0520T) is used.

(A') polycarbonate resin

PC (Brand name: SC-1190C) with a molecular weight 18,000 to 20,000 g/mol from Cheil Industries (Inc) is used.

(A") Polymethylmethacrylate resin

PMMA (Brand name: IF850-G1) from LG Chem. Ltd. is used.

(B) A low molecular weight acrylic copolymer

Polybutylacrylate (Brand name: JONCRYL ADP-1200) from BASF with a weight average molecular weight 1,500 to 2,000 g/mol, and a refractive index of 1.46 is used.

(B') Acetoglyceryl fatty acid

Acetomonoglyceride (Brand name: SOLFA-AM-GT90) with a carbon number of 6 to 16 from Ilshin Organic Chem Ltd. is used.

Examples 1-3 and Comparative Examples 1-7

After mixing the above components in the amounts indicated in the Table 1 below, the composition is extruded by a twin screw extruder to make pellets. The prepared pellets are dried and injection molded to make specimens for physical properties measurements. Physical properties are measured in accordance with the following methods, and the results are presented in Table 1 below.

(1) Flowability: Melt flow index is measured at 220°C with a 10kg load in accordance with ISO 1133.

(2) Transparency: The total luminous transmittance and Haze for a specimen of 2.5mm thickness is measured in accordance with ASTM D1003 using color computer measuring equipment from SUGA INSTRUMENT.

$$\text{Total luminous transmittance (\%)} = (\text{Transmitted light of specimen/illuminated light on the specimen}) \times 100$$

$$\text{HAZE (\%)} = (\text{Diffused light / total luminous transmittance}) \times 100$$

(3) Impact strength: Notched Izod impact strength of a specimen with a thickness of 3.175 mm (1/8") is measured in accordance with ASTM D256.

**[Table 1]**

|  |  | Examples | | | Comparative Examples | | | | | | |
|---|---|---|---|---|---|---|---|---|---|---|---|
|  |  | 1 | 2 | 3 | 1 | 2 | 3 | 4 | 5 | 6 | 7 |
| (A)(Parts by weight) | (A) | 100 | 100 | 100 | 100 | 100 | 100 | 100 | 100 | - | - |
|  | (A') | - | - | - | - | - | - | - | - | 100 | - |
|  | (A") | - | - | - | - | - | - | - | - | - | 100 |

(continued)

| | | Examples | | | Comparative Examples | | | | | | |
|---|---|---|---|---|---|---|---|---|---|---|---|
| | | 1 | 2 | 3 | 1 | 2 | 3 | 4 | 5 | 6 | 7 |
| (B)(Parts by weight) | (B) | 1.5 | 2.5 | 3.5 | - | - | - | - | 10 | 2.5 | 2.5 |
| | (B') | - | - | - | - | 1.5 | 2.5 | 3.5 | - | - | - |
| Melt flow index (g/10 min.) | | 13.3 | 25.1 | 30.4 | 9.8 | 12.5 | 22.7 | 28.5 | 40.5 | 35 | 15 |
| Haze (%) | | 2.5 | 3.1 | 4.5 | 2.0 | 3.0 | 4.2 | 5.8 | 12.3 | 8.8 | 7.5 |
| Notched Izod impact strength (kgf·cm/cm) | | 11.6 | 12.3 | 12.1 | 12.1 | 11.5 | 11.5 | 12.4 | 10.7 | 45.2 | 2.4 |

As seen from the above Table 1, Examples 1-3, which include a low molecular weight acrylic copolymer in a transparent rubber modified aromatic vinyl copolymer, exhibit a melt flow index of more than 13 g/10min and less than 35 g/10 min and a haze more than 2% and less than 5%.

Comparative Example 1, which includes only a transparent rubber modified aromatic vinyl copolymer, exhibits a significant decrease in flowability. Comparative Examples 2 to 4, which include acetoglyceryl fatty acid instead of a low molecular weight acrylic copolymer, exhibit inferior flowability and transparency as compared to Examples 1 to 3. Comparative Example 5, which includes a low molecular weight acrylic copolymer in an amount greater than the present invention, also exhibits significantly impaired transparency as well as impact strength. Comparative Example 6, which includes a polycarbonate resin instead of a transparent rubber modified aromatic vinyl copolymer, exhibits a significant decrease in transparency. Comparative Example 7, which includes a polymethylmethacrylate instead of a transparent rubber modified aromatic vinyl copolymer, exhibits a significant decrease in flowability, transparency, and impact strength.

Many modifications and other embodiments of the invention will come to mind to one skilled in the art to which this invention pertains having the benefit of the teachings presented in the foregoing descriptions. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation, the scope of the invention being defined in the claims.

## Claims

1. A thermoplastic resin composition comprising:

(A) transparent rubber modified aromatic vinyl copolymer comprising (a1) a graft copolymer including a core of a rubber based polymer and a shell formed on a surface of said core by graft polymerization of alkyl ester monomer, unsaturated nitrile monomer, and aromatic vinyl monomer; and (a2) a non-graft copolymer including a unit derived from an alkyl ester monomer; and
(B) a low molecular weight acrylic copolymer having a weight average molecular weights of 1,000 to 10,000 g/mol.

2. The thermoplastic resin composition according to Claim 1, wherein said transparent rubber modified aromatic vinyl copolymer (A) comprises said graft copolymer (a1) in an amount of 5 to 50 % by weight, and said non graft copolymer (a2) in an amount of 50 to 95 % by weight.

3. The thermoplastic resin composition according to Claim 1 or 2, wherein the average particle size of said rubber based polymer is in a range of 0.10 to 0.30 μm.

4. The thermoplastic resin composition any one of Claims 1 to 3, wherein said rubber based polymer comprises a butadiene rubber, acrylic rubber, ethylene-propylene copolymer rubber, butadiene-styrene copolymer rubber, acrylonitrile-butadiene copolymer rubber, isoprene rubber ethylene-propylene-diene terpolymer rubber, polyorganosiloxane-polyalkyl(meth)acrylate rubber complex, or a combination thereof.

5. The thermoplastic resin composition any one of Claims 1 to 4, wherein said shell includes an inner shell and an outer shell, and wherein said outer shell includes a unit derived from an acrylic alkyl ester monomer or methacrylic alkyl ester monomer.

6. The thermoplastic resin composition any one of Claims 1 to 5, wherein said inner shell is a polymerization product of unsaturated nitrile monomer and aromatic vinyl monomer, and wherein said outer shell is a polymerization product of an acrylic alkyl ester monomer, methacrylic alkyl ester monomer, or a combination thereof.

7. The thermoplastic resin composition any one of Claims 1 to 6, wherein said inner shell and said outer shell are copolymerization products of an acrylic alkyl ester monomer or methacrylic alkyl ester monomer, unsaturated nitrile monomer, and aromatic vinyl monomer.

8. The thermoplastic resin composition any one of Claims 1 to 7, wherein said graft copolymer (a1) comprises said core in an amount of 30 to 70 % by weight, an unit derived from an alkyl ester monomer in an amount of 15 to 55 % by weight, an unit derived from unsaturated nitrile monomer in an amount of 1 to 5 % by weight, and an unit derived from aromatic vinyl monomer in an amount of 5 to 35 % by weight.

9. The thermoplastic resin composition any one of Claims 1 to 8, wherein said non-graft copolymer (a2) includes a unit derived from an alkyl ester monomer in an amount of 40 to 100 % by weight.

10. The thermoplastic resin composition any one of Claims 1 to 9, wherein said non-graft copolymer (a2) comprises a polymer or copolymer or a combination thereof of acrylic alkyl ester monomer, methacrylic alkyl ester monomer, or a combination thereof; a copolymer of alkyl ester monomer and aromatic vinyl monomer; a copolymer of alkyl ester monomer, aromatic vinyl monomer, and unsaturated nitrile monomer; or a combination thereof.

11. The thermoplastic resin composition any one of Claims 1 to 10, further including an additive selected from the group consisting of antibacterial agents, thermo-stabilizers, antioxidants, release agents, light stabilizers, inorganic fillers, surfactants, coupling agents, plasticizers, compatibilizers, lubricants, antistatic agents, coloring agents, pigments, dyes, flame retardants, auxiliary flame retardants, anti-dripping agents, weather resistance agents, ultraviolet absorbents, sunscreen agents, and combinations thereof.

12. The thermoplastic resin composition any one of Claims 1 to 11, comprising said component (B) in an amount of 0.5 to 5 parts by weight based on 100 parts by weight of said component (A).

13. A thermoplastic resin composition characterized comprising:

   (A) a transparent rubber modified aromatic vinyl copolymer comprising (a1) a graft copolymer including a core of a rubber based polymer and a shell formed on a surface of said core by graft polymerization of alkyl ester monomer, unsaturated nitrile monomer, and aromatic vinyl monomer; and (a2) a non-graft copolymer including a unit derived from an alkyl ester monomer; and
   (B) a low molecular weight acrylic copolymer having a weight average molecular weights of 1,000 to 10,000 g/mol, wherein the thermoplastic resin composition has a melt flow index of 13 to 35 g/10min measured in accordance with ISO 1133 at 220°C and a 10 kg load , a haze of 2 to 5% for a specimen with a 2.5mm thickness measured in accordance with ASTM D1003, and a Notched Izod impact strength of 11 to 15 kgf·cm/cm of a specimen with a 3.175 mm thickness measured in accordance with ASTM D256.

Europäisches
Patentamt

European
Patent Office

Office européen
des brevets

# EUROPEAN SEARCH REPORT

Application Number

EP 12 19 8212

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/032907 A1 (CHEIL IND INC [KR]; JIN YOUNG SUB [KR]; HONG JAE KEUN [KR]; PARK HWAN) 20 March 2008 (2008-03-20)<br>* paragraphs [0027] - [0029]; claims; examples * <br>----- | 1-13 | INV.<br>C08L55/02<br>C08F285/00 |
| X | WO 2011/053627 A2 (POLYONE CORP [US]; ZHU SHIXIONG [US]; AVAKIAN ROGER W [US])<br>5 May 2011 (2011-05-05)<br>* paragraphs [0024] - [0027], [0031], [0032]; claims; examples * <br>----- | 1-13 | |

TECHNICAL FIELDS
SEARCHED      (IPC)

C08L
C08F

The present search report has been drawn up for all claims

| Place of search | Date of completion of the search | Examiner |
|---|---|---|
| Munich | 29 April 2013 | Iraegui Retolaza, E |

EPO FORM 1503 03.82 (P04C01)

**ANNEX TO THE EUROPEAN SEARCH REPORT
ON EUROPEAN PATENT APPLICATION NO.**

EP 12 19 8212

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2013

| Patent document cited in search report | | Publication date | Patent family member(s) | | Publication date |
|---|---|---|---|---|---|
| WO 2008032907 | A1 | 20-03-2008 | CN | 101506300 A | 12-08-2009 |
| | | | KR | 20080024042 A | 17-03-2008 |
| | | | US | 2009156719 A1 | 18-06-2009 |
| | | | WO | 2008032907 A1 | 20-03-2008 |
| WO 2011053627 | A2 | 05-05-2011 | CN | 102597108 A | 18-07-2012 |
| | | | EP | 2493980 A2 | 05-09-2012 |
| | | | US | 2012220711 A1 | 30-08-2012 |
| | | | WO | 2011053627 A2 | 05-05-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 0714887